# EUROPEAN PATENT APPLICATION

(11) **EP 4 588 637 A1**
(43) Date of publication of application: **23.07.2025**
(21) Application number: 24305106.7
(22) Date of filing: 17.01.2024
(51) Int. Cl.: B28B 19/00, C04B 28/14, E04C 2/04, C04B 111/00

(54) **METHOD FOR MANUFACTURING A PLASTERBOARD**

(71) Applicant: SAINT-GOBAIN PLACO, 92400 Courbevoie (FR)
(72) Inventor: HERVIO, Valentine, 92400 Courbevoie (FR); CEDANO SERRANO, Francisco Javier, 93300 Aubervilliers (FR); KOVACS, Gergely, H-2085 PILISVOROSVAR (HU)
(74) Representative: Saint-Gobain Recherche

(57) **Abstract**

The present invention relates to a method for manufacturing a plasterboard using a combination of at least two dispersants. It also relates to a plasterboard obtainable by such method, and a composition which may be used in such method.

## Description

The present invention relates to a method for manufacturing a plasterboard using a combination of at least two dispersants. It also relates to a plasterboard obtainable by such method, and a composition which may be used in such method.

### TECHNICAL BACKGROUND

Plasterboards are panels comprising a layer of gypsum between two facing sheets generally made of a paper liner. Industrially, the method for the manufacture of plasterboards comprises three main stages: the forming, the setting and the drying. During the stage of forming the plasterboard, a slurry is continuously prepared in a mixer starting from stucco, water and other specific ingredients in order to adjust the properties of the composition and/or of the final product. The composition is subsequently cast continuously over a first sheet entrained by a conveyor belt in order to form the board. After the edges of the first sheet have been folded over, a second facing sheet is introduced. Usually, an extruder is used to flatten the second sheet over the composition, smooth the surfaces and adjust the thickness of the plasterboard to the desired value.

One feature that has been the subject of numerous studies is the optimization of the fluidity of the slurry. The fluidity of the slurry is a crucial parameter in processes for the manufacture of plasterboards because a good fluidity enables a homogeneous mixing and easy spreading of the slurry. In order to increase such fluidity, large amounts of water are usually added to the slurry. However, large amounts of water require a longer drying of the plasterboard, which is not optimal in terms of energy and, in particular, CO2 emissions. In order to decrease such amount of water, several dispersants (or equivalently "fluidizers") have been developed and used as additive in slurries. Polynaphthalene sulfonate (PNS) is the most common dispersant and is indeed very effective. However, the evolution of the fluidity as a function of the concentration of PNS in the slurry is asymptotic. This means that, at some point, the fluidity of a slurry comprising PNS reaches a limit, even if higher amounts of PNS are added. Another technology, called "superdispersants" (or equivalently "superfluidizers"), are much more effective in terms of fluidity of the slurry. The most common superdispersants are polycarboxylate ethers (PCE). Nevertheless, such superdispersants have several drawbacks. In particular, in slurries, foaming agents are usually added in order to create pores within the set gypsum core and consequently to decrease the board weight and to improve the adhesion between the core and the facing sheets. Superdispersants like PCE tend to stabilize the foam and thus prevents it from achieving the desired pore size needed for a good adhesion.

Thus, there remains a need to provide a method for manufacturing a plasterboard which allows to use a reduced amount of water in the slurry, while maintaining a suitable fluidity of the slurry and a suitable porosity of the set gypsum core to ensure good liner-gypsum core adhesion.

### SUMMARY OF THE INVENTION

After carrying out extensive research, the inventors have discovered that such need could satisfied by using a combination of a first dispersant and a second dispersant in particular weight ratios, the first dispersant being polynaphthalene sulfonate and the second dispersant being a polycarboxylate ether, a polyaryl ether, a lignosulfonate or any combination thereof. The inventors were surprised to see that such combination is compatible and that the control of the weight ratios between the first and second dispersant allows to circumvent the drawbacks of each the dispersant when used separately.

Hence, the present invention relates to a method for the manufacture of a plasterboard, comprising :
- providing a composition comprising water, stucco, a foaming agent, a first dispersant being polynaphthalene sulfonate and a second dispersant being chosen from a polycarboxylate ether, a polyaryl ether, a lignosulfonate and any combination thereof, the dry weight content of the first dispersant being from 20 to 80 %, based on the total dry weight of the first and second dispersants,
- casting the composition on a first liner, so as to form a wet gypsum layer on said first liner,
- providing a second liner on said wet gypsum layer, thereby forming a wet plasterboard, and
- drying the wet plasterboard, so as to form the plasterboard.

In some embodiment, the composition is formed by a process comprising adding the first and second dispersants separately:
i) to a mixture comprising all or part of the remaining components; or
ii) to water, in order to form a diluted solution, and then by adding said diluted solution to a mixture comprising all or part of the remaining components.

In some embodiments, the second dispersant is a polycarboxylate ether or a polyaryl ether, preferably a polycarboxylate ether.

In some embodiments, the second dispersant is a lignosulfonate.

In some embodiments, the dry weight content of the first dispersant is from 40 to 80%, preferably from 50 to 70 %, based on the total dry weight of the first and second dispersants. In some embodiments, the total content of dispersants, based on the dry weight, is from 0.03 to 4 wt%, preferably from 0.07 to 3 wt%, more preferably 0.07 to 2.5 wt%, even more preferably from 0.1 to 2 wt% relative to the dry weight of stucco.

In some embodiments, the foaming agent comprises an alkyl sulfate.

In some embodiments, the content of the foaming agent, based on dry weight, is from 0.02 to 3 wt%, preferably from 0.03 to 2 wt%, more preferably from 0.05 to 1 wt%, even more preferably from 0.06 to 0.5 wt%, relative to the dry weight of stucco.

In some embodiments, the content of stucco is at least 70 wt%, relative to the total dry content of the composition.

In some embodiments, the weight ratio of water to stucco in the composition is:
- at least 0.19 and
- at most 0.85, preferably at most 0.80, more preferably at most 0.65, even more preferably at most 0.55.

In some embodiments, the composition further comprises one or more ingredients selected from adhesion agents, setting accelerators, setting retarders, anti-burning agents, anti-sag agents, fire-resistant agents, anti-shrinkage agents, biocidal agents, and water repellents.

In some embodiments, each of the first and second liners is, independently from each other, a paper liner, a cardboard liner, or a glass veil, preferably both are paper liners.

The present invention also relates to a plasterboard (preferably made by a method as defined herein) comprising a gypsum core between a first liner and a second liner, wherein said gypsum core comprises:
- set gypsum,
- a first dispersant being polynaphthalene sulfonate and
- a second dispersant being chosen from a polycarboxylate ether, a polyaryl ether, a lignosulfonate and any combination thereof,
the dry weight content of the first dispersant being from 20 to 80 %, based on the total dry weight of the first and second dispersants.

Another object of the present invention is a composition comprising water, stucco, a foaming agent, a first dispersant being polynaphthalene sulfonate and a second dispersant being chosen from a polycarboxylate ether, a polyaryl ether, a lignosulfonate and any combination thereof, the dry weight content of the first dispersant being from 20 to 80 %, based on the total dry weight of the first and second dispersants.

### FIGURES

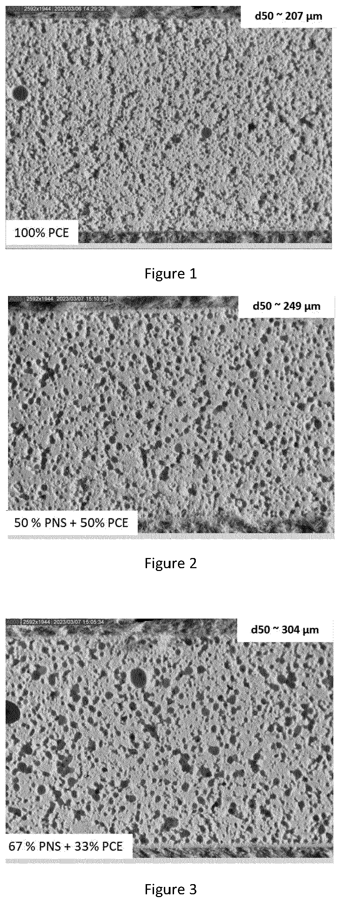

Figure 1 shows an image of a gypsum core obtained from a composition comprising a dispersant consisting of PCE.
Figure 2 shows an image of a gypsum core obtained from a composition comprising a blend of dispersants consisting of 50 wt% PNS and 50 wt% PCE.
Figure 3 shows an image of a gypsum core obtained from a composition comprising a blend of dispersants consisting of 67 wt% PNS and 33 wt% PCE.

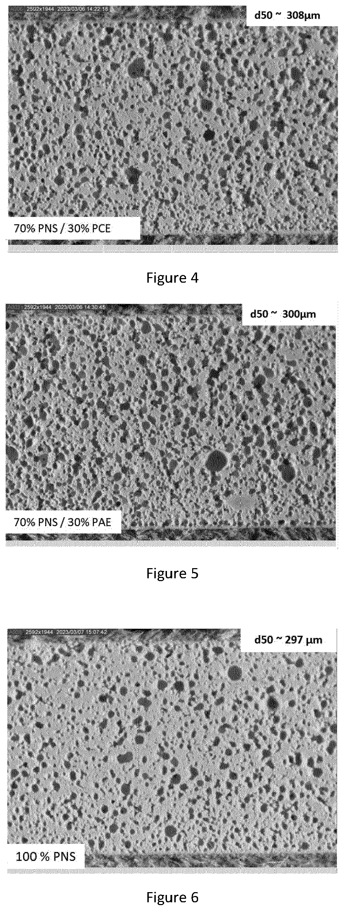

Figure 4 shows an image of a gypsum core obtained from a composition comprising a blend of dispersants consisting of 70 wt% PNS and 30 wt% PCE.
Figure 5 shows an image of a gypsum core obtained from a composition comprising a blend of dispersants consisting of 70 wt% PNS and 30 wt% PAE.
Figure 6 shows an image of a gypsum core obtained from a composition comprising a dispersant consisting of PNS.

### DETAILED DESCRIPTION

The present invention is based on the use of a particular combination of dispersants in a composition (which may be also called herein "slurry") for manufacturing a plasterboard.

More particularly, the present invention provides a composition which comprises:
- water,
- stucco,
- a foaming agent,
- a first dispersant being polynaphthalene sulfonate, and
- a second dispersant being chosen from a polycarboxylate ether, a polyaryl ether, a lignosulfonate and any combination thereof,
the dry weight content of the first dispersant being from 20 to 80 %, based on the total dry weight of the first and second dispersants.

As used herein, the term "gypsum" encompasses:
- calcium sulphate dihydrate (CaSO₄, 2H₂O), which corresponds to a set gypsum,
- calcium sulphate hemihydrate (CaSO₄, ½ H₂O), which corresponds to a non-set gypsum (also called "gypsum hemihydrate" or "plaster"), and/or
- a mixture thereof, which in particular corresponds to a gypsum which is not completely set.

As used herein, the term "stucco" refers to any natural or synthetic stucco, which consists of
- or essentially consists of - calcium sulphate hemihydrate (CaSO₄, ½ H₂O).

Calcium sulphate hemihydrate can be alpha calcium sulfate hemihydrate ("α-hemihydrate") or beta calcium sulfate hemihydrate ("β-hemihydrate"), preferably beta calcium sulfate hemihydrate.

Alpha calcium sulfate hemihydrate is produced from calcined gypsum in an atmosphere saturated with water vapor, and beta calcium sulfate hemihydrate is produced under conditions where the partial pressure of water vapor is low.

The expression "plasterboard" (or equivalently: "gypsum-based panel" or "gypsum board" or "drywall") denotes for example the finished product formed by set gypsum but also a plasterboard in the course of manufacture in which the gypsum is not completely set.

Advantageously, the content of stucco in the composition is at least 70 wt% (for instance at least 80 wt%, at least 90 wt%, at least 95 wt% or at least 98 wt%), relative to the total dry content of the composition.

In some embodiments, the weight ratio of water to stucco (such ratio being also named "water gauge") in the composition is at least 0.19, for instance at least 0.25, at least 0.3, or at least 0.4.

In some embodiments, the weight ratio of water to stucco in the composition is at most 0.85, preferably at most 0.80, for instance at most 0.65, or at most 0.5.

In a particular embodiment, the weight ratio of water to stucco in the composition is from 0.25 to 0.65, preferably from 0.25 to 0.5.

In some embodiments, the stucco is a synthetic stucco and the weight ratio of water to stucco is from 0.25 to 0.5.

In some embodiments, the stucco is a natural stucco and the weight ratio of water to stucco is from 0.25 to 0.65.

The composition comprises a foaming agent. The presence of a foaming agent enables to create air pores, in the gypsum layer of the plasterboard. Foaming agents used in the field of gypsum-based products are well-known to the skilled artisan.

In some embodiments, the foaming agent comprises (preferably, consists of) an alkyl sulfate, an alkyl ether sulfate, or any combination thereof.

Preferably, the foaming agent comprises (preferably, consists of) an alkyl sulfate.

In some embodiments, the content of the foaming agent (based on dry weight) is from 0.02 to 3 wt%, preferably from 0.03 to 2 wt%, more preferably from 0.05 to 1 wt%, even more preferably from 0.06 to 0.5 wt%, relative to the dry weight of stucco.

The composition comprises a first dispersant and a second dispersant. Dispersants are also known as "fluidizers", "plasticizers" or "water reducing agents".

The first dispersant is a polynaphthalene sulfonate (PNS). This polymer of naphthalene sulfonate is well-known to the skilled artisan. The weight average molecular weight of PNS is usually comprised between 8,000 and 50,000, although it is preferred in this invention to use PNS having a weight average molecular weight between 8,000 and 20,000, and more preferably between 8,000 and 14,000. The weight average molecular weight of a polymer can be determined by light scattering.

The second dispersant is chosen from a polycarboxylate ether, a polyaryl ether, a lignosulfonate and any combination thereof.

In some embodiments, the second dispersant is a polycarboxylate ether or a polyaryl ether In a particular embodiment, the second dispersant is a polycarboxylate ether.

In another particular embodiment, the second dispersant is a polyaryl ether.

In some embodiments, the second dispersant is a lignosulfonate.

In some embodiments, the second dispersant is a combination of:
a) a polycarboxylate ether or a polyaryl ether, and
b) a lignosulfonate.

A "polycarboxylate ether" refers to a copolymer comprising a first and a second repeating unit, wherein:
- the first repeating unit is an olefinic unsaturated mono-carboxylic acid repeating unit or an ester or salt thereof, or an olefinic unsaturated sulphonic acid repeating unit or an ester or salt thereof, and
- the second repeating unit is a repeating unit of an olefinic unsaturated alcohol substituted by a polyalkylene glycol group.

In some embodiments, the first repeating unit is present in an amount from 30 to 99 mol% and the second repeating unit is present in an amount from 70 to 1 mol%, based on the total amount of first and second repeating units.

The olefinic unsaturated mono-carboxylic acid repeating units (or an ester or salt thereof) may in particular be repeating units of acrylic acid, methacrylic acid, crotonic acid, isocrotonic acid, or esters or salts thereof.

The olefinic unsaturated sulphonic acid repeating units (or an ester or salt thereof) may in particular be allyl sulfonic acid, vinyl sulfonic acid, or esters or salts thereof.

Preferably, the first repeating units are repeating units of acrylic acid or methacrylic acid.

The second repeating units are preferably repeating units of formula (I): 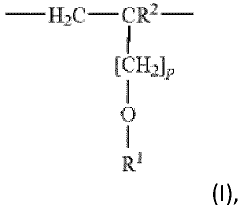 wherein:
- p is an integer from 0 to 3,
- R² is a hydrogen or a C1-C5 aliphatic group (e.g. a C1-C5 alkyl group),
- R¹ is of formula (II): 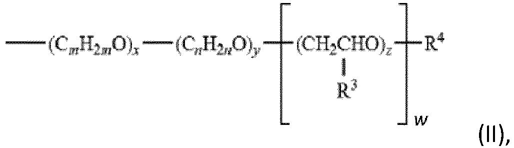 in which:
   - each of m and n is, independently, an integer from 2 to 4,
   - each of x and y is, independently, an integer from 55 to 350,
   - w is 0 or 1,
   - when present, z is an integer from 55 to 350,
   - when present, R³ is an unsubstituted or substituted aryl (e.g. phenyl), and
   - R⁴ is a hydrogen, a C1-C20 aliphatic group, a C5-C8 cycloaliphatic group, an unsubstituted or substituted aryl, or one of the following groups: 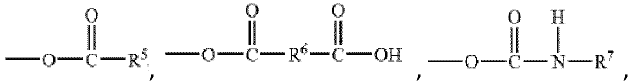 in which:
      - R⁵ is an alkyl (e.g. C1-C12 alkyl), aryl, aralkyl (e.g. aryl-(C1-C12 alkyl)) or alkylaryl (e.g. (C1-C12 alkyl)-aryl) group,
      - R⁶ is a divalent alkyl (e.g. C1-C12 alkyl), aryl, aralkyl (e.g. aryl-(C1-C12 alkyl)) or alkylaryl (e.g. (C1-C12 alkyl)-aryl) group, and
      - R⁷ is an alkyl (e.g. C1-C12 alkyl), aryl, aralkyl (e.g. aryl-(C1-C12 alkyl)) or alkylaryl (e.g. (C1-C12 alkyl)-aryl) group.

In some embodiments, at least one of m and n is 2. In some embodiments, each of m and n is, independently, 2 or 3.

When m or n is 2, then the corresponding moiety is -(C₂H₄O)-, namely: -(CH₂-CH₂-O)-.

When m or n is 3, then the corresponding moiety is -(C₃H₆O)-, which can be: -(CH₂-CH₂-CH₂-O)-, -(CH₂-CH(CH₃)-O)-, or -(CH(CH₃)-CH₂-O)-.

When m or n is 4, then the corresponding moiety is -(C₄H₈O)-, which can for instance be: - (CH₂-CH₂-CH₂-CH₂-O)-, -(CH₂-CH₂-CH(CH₃)-O)-, -(CH(CH₃)-CH₂-CH₂-O)- or -(CH(CH₃)-CH(CH₃)-O)-.

The weight average molecular weight of a polycarboxylate ether may advantageously be from 20 000 to 60000 Da.

Polycarboxylate ethers are further described, in particular, in patent applications US 2006/281885 and US 2006/281886, herein incorporated by reference.

A "polyaryl ether" refers to a polymer comprising aromatic moieties and ether moieties, preferably aromatic ether moieties, within its backbone. Polyaryl ethers are well-known to the skilled artisan and are, in particular, described in patent application EP 2 627 708.

In a particular embodiment, the polyaryl ether is a polycondensation product comprising (or based on):
i) at least one aromatic or heteroaromatic unit comprising a polyether side chain, and
ii) at least one phosphated aromatic or heteroaromatic unit.

Preferably, said aromatic or heteroaromatic unit comprising a polyether side chain comprises one or more polyalkylene glycol side chains, more preferably one or more polyethylene glycol side chains. In particular, it is preferred that the aromatic or heteroaromatic unit comprising a polyether side chain (preferably one or more polyalkylene glycol side chains) is selected from the group consisting of alkoxylated, more preferably ethoxylated hydroxyl-functionalized aromatic or heteroaromatic compounds. For example, said hydroxyl-functionalized aromatic or heteroaromatic compounds are selected from phenoxyethanol, phenoxypropanol, 2-alkoxyphenoxyethanol, 4-alkoxyphenoxyethanol, 2-alkylphenoxyethanol, 4-alkylphenoxyethanol or mixtures thereof. Further preferred aromatic or heteroaromatic unit comprising a polyether side chain (preferably one or more polyalkylene glycol side chains) are alkoxylated, preferably ethoxylated amino-functionalized aromatic or heteroaromatic compounds such as N,N-(dihydroxyethyl)aniline, N-(hydroxyethyl)aniline, (dihydroxypropyl)aniline, N-(hydroxypropyl)aniline or mixtures thereof. Even more preferred are alkoxylated phenol derivatives such as phenoxyethanol and/or phenoxypropanol. Particularly preferred are alkoxylated, more preferably ethoxylated phenol derivatives having a weight average molecular weight in the range of 300 to 10 000 Dalton, for example polyethyleneglycol monophenylether.

The phosphated aromatic or heteroaromatic unit can be obtained by phosphating of the corresponding alcohols with polyphosphoric acid and/or phosphorous pentoxide according to methods known in the art. Preferably, the phosphated aromatic or heteroaromatic unit is selected from the group of alkoxylated, preferably ethoxylated hydroxyl-functionalized aromatic or heteroaromatic compounds comprising at least one phosphoric ester group such as phenoxyethanolphosphate and/or poly(ethylenglycol)monophenylether phosphate and/or alkoxylated, preferably ethoxylated amino-functionalized aromatic or heteroaromatic compounds comprising at least one phosphoric ester group such as N,N-(dihydroxyethyl)anilin diphosphate, N,N-(dihydroxyethyl)aniline phosphate, N-(hydroxypropyl)aniline phosphate, N,N-(dihydroxyethyl)aniline phosphate, N-(hydroxypropyl)aniline phosphate or mixtures thereof. Even more preferred are alkoxylated, more preferably ethoxylated phenol derivatives comprising at least one phosphoric ester group such as polyethyleneglycol monophenylether phosphate.

Preferably, the at least one aromatic or heteroaromatic unit comprising a polyether side chain is represented by the following formula (III):

A-B-[(CH(R⁸)-CH(R⁹)-O)ₐ-X]_{q} (III),

in which:
A represents a substituted or unsubstituted aryl or heteroaryl having 5 to 10 carbon atoms;
B represents N, NH or O;
q=2 if B is N and q=1 if B is NH or O;
each of R⁸ and R⁹ represents, independently, a hydrogen, a C1-C10 alkyl, a C5-C8-cycloalkyl, an aryl, or a heteroaryl;
a is an integer from 1 to 300, preferably 10 to 60, more preferably 20 to 50; and
X represents a hydrogen, a C1-C10 alkyl, a C5-C8-cycloalkyl, an aryl, or a heteroaryl.

Preferably, the at least one phosphated aromatic or heteroaromatic unit is represented by the following formula (IV):

D-E-[(CH(R¹⁰)-CH(R¹¹)-O)_{b}-P(O)(OM)₂]ᵣ (IV),

in which:
D represents a substituted or unsubstituted aryl or heteroaryl having 5 to 10 carbon atoms;
E represents N, NH or O;
r=2 if E is N and r=1 if E is NH or O;
each of R¹⁰ and R¹¹ represents, independently, a hydrogen, a C1-C10 alkyl, a C5-C8-cycloalkyl, an aryl, or a heteroaryl;
each M is, independently, a hydrogen, an alkaline metal (e.g. Na, Li, K), or an ammonium, and b is an integer from 0 to 300.

In some embodiments, said polycondensation product further comprises at least one aromatic or heteroaromatic unit.

Typically, this at least one aromatic or heteroaromatic unit differs from the at least one phosphated aromatic or heteroaromatic unit only in that it has a hydrogen instead of the phosphate -P(O)(OM)₂ group.

Preferably, the optional at least one aromatic or heteroaromatic unit is represented by the following formula (V):

D-E-[(CH(R¹⁰)-CH(R¹¹)-O)_{b}-H]ᵣ (V),

in which D, E, r, R¹⁰, R¹¹, and b are as defined for formula (IV).

In some embodiments, said polycondensation product further comprises a unit represented by the following formula (VI):

(Y¹)(Y²)C(R¹²)(R¹³) (VI),

in which:
each of Y1 and Y2 represents, independently, the formula (III) or (IV) as described above, and
each of R¹² and R¹³ represents, independently, a hydrogen, a methyl, -COOH or a substituted or unsubstituted aryl or heteroaryl having 5 to 10 carbon atoms (e.g. phenyl), preferably a hydrogen.

The polycondensation product may comprise (or be based on) units of formula (III) which may be identical or different to each other.

The polycondensation product may comprise (or be based on) units of formula (IV) which may be identical or different to each other.

The polycondensation product may comprise (or be based on) units of formula (V) which may be identical or different to each other.

The polycondensation product may comprise (or be based on) units of formula (VI) which may be identical or different to each other.

In some embodiments, the molar ratio of the units (III) : (IV) within the polyarylether is from 1:15 to 15:1, preferably from 1:10 to 10:1, more preferably from 1:5 to 3:1.

When unit (V) is present, the molar ratio between the units (III) : [(IV)+(V)] within the polyarylether is preferably from 1:15 to 15:1, more preferably from 1:10 to 10:1.

When unit (VI) is present, the molar ratio between the units [(III) + (IV)] : (VI) within the polyarylether is preferably from 1:0.8 to 3.

When units (V) and (VI) are present, the molar ratio between the units [(III) + (IV) + (V)] : (VI) within the polyarylether is preferably from 1:0.8 to 3.

The weight average molecular weight of the polyaryl ether may be in the range from 4 000 to 150 000 Da, preferably from 10 000 to 100 000, more preferably from 15 000 to 75 000 Da.

As used herein, "aliphatic" refers to a linear or branched, saturated or unsaturated, acyclic hydrocarbon group.

As used herein, "cycloaliphatic" refers to a mono- or polycyclic, saturated or unsaturated, hydrocarbon group.

As used herein, "alkyl" refers to a linear or branched, saturated hydrocarbon group. Examples of alkyl include, but are not limited to, methyl, ethyl, propyl, isopropyl, butyl, pentyl, hexyl, heptyl, octyl, nonyl, or decyl.

As used herein, "cycloalkyl" refers to mono- or poly-cyclic, saturated hydrocarbon group. Examples of cycloalkyl include, but are not limited to, cyclopentyl, cyclohexyl, cycloheptyl, or cyclooctyl.

As used herein, "aryl" refers to a mono- or poly-cyclic aromatic hydrocarbon having preferably from 5 to 12 (or from 5 to 10) carbon ring atoms. An example of aryl is phenyl.

As used herein, "heteroaryl" refers to a mono- or poly-cyclic aromatic hydrocarbon, having preferably from 5 to 12 (or from 5 to 10) carbon ring atoms, comprising at least one heteroatom within the aromatic ring.

As used herein, "aralkyl" refers to an alkyl as defined herein, substituted by at least one aryl as defined herein (e.g. benzyl).

As used herein, "alkylaryl" refers to an aryl as defined herein, substituted by at least one alkyl as defined herein (e.g. methylphenyl).

The "lignosulfonate" refers to the product that is obtained by the introduction of sulfonic groups into the lignin molecule, i.e. sulfonated lignins as well as sulfite lignins. Lignin may be sulfonated by the reaction with sulfite or bisulfite compounds via the well-known sulfonation or sulfoalkylation processes such as high temperature sulfonation, oxidative sulfonation at ambient temperature, or sulfoalkylation involving a reaction of lignin with sodium sulfite and an aldehyde. Sulfite lignin, inherently obtained during sulfite pulping of wood, straw, corn stalks, bagasse, and the like, and that is a principal constituent of the spent sulfite liquor obtained from that process, is also included in the expression "lignosulfonate".

The lignosulfonate may in particular be ammonium (NH₄⁺), alkali metal (e.g. Na⁺, K⁺, Li+) or alkaline-earth metal salts (e.g. Ca²⁺, Mg²⁺) of lignosulphonic acid.

The lignosulfonate may have a very wide range of molecular weights, for instance molecular weights from 10,000 to 200,000 Daltons. Lignosulfonate is usually polydisperse.

Examples of suitable commercially available lignosulfonates are Ligno Arbo C12 (from Tembec), Bretax (e.g. Bretax C, from Burgo Group), Novibond (e.g. Novibond AC, available from Plater Chemicals Group), Ligno (e.g. Lignon Solus 5CA, Ligno DP921, Ligno CA524, Ligno CA95, and Ligno CA95h, from Borregaard), and Lignobond (available from Borregaard).

The dry weight content of the first dispersant is from 20 to 80%, based on the total dry weight of the first and second dispersants. In some embodiments, such dry weight content is from 30 to 80%, from 40 to 80%, from 50 to 80%, from 60 to 80%, from 20 to 40%, from 20 to 50%, from 20 to 60%, from 20 to 70%, from 30 to 50%, from 30 to 60%, from 30 to 70%, from 40 to 60%, from 40 to 70%, or from 50 to 70 %, based on the total dry weight of the first and second dispersants.

Advantageously, the total dry weight content of the first dispersant and the second dispersant is at least 70 wt%, for instance at least 80 wt%, at least 90 wt%, at least 95 wt%, or at least 98 wt%, of the total dry weight of dispersants.

Preferably, the composition does not comprise dispersants other than the first and second dispersants as described herein. In other words, preferably, the first and second dispersant (based on their dry weights) represent together 100% of the total dry weight of dispersants.

In some embodiments, the content of the first dispersant (based on dry weight) is from 0.01 to 3.2 wt%, preferably from 0.02 to 1.6 wt%, more preferably from 0.06 to 1.0 wt% relative to the dry weight of stucco.

In some embodiments, the content of the second dispersant (based on dry weight) is from 0.01 to 3.7 wt%, preferably from 0.05 to 2.5 wt%, more preferably from 0.1 to 2 wt%, even more preferably from 0.24 to 1.8 wt%, relative to the dry weight of stucco.

In some embodiments, the total content of dispersants (based on dry weight) is from 0.03 to 4 wt%, preferably from 0.07 to 3 wt%, more preferably 0.07 to 2.5 wt%, even more preferably from 0.1 to 2 wt%, relative to the dry weight of stucco.

The composition described herein may comprise further ingredients, in particular to tune the physico-chemical properties of the composition and/or of the plasterboard.

In some embodiments, the composition further comprises one or more adhesion agents (or equivalently "adhesive").

Such adhesion agents may in particular be chosen from starches such as acid-hydrolyzed or pre-gelatinized starches, polyvinyl acetate, polyvinyl alcohol, dextrins, and a flour in particular corn or wheat or sorghum flour.

When present, the content of adhesion agents (based on dry weight) is advantageously from 0.1 to 10 wt%, preferably from 0.5 to 7 wt%, or even 1 to 5 wt%, relative to the dry weight of stucco.

Other examples of ingredients are setting accelerators, setting retarders, anti-burning agents, anti-sag agents, fire-resistant agents, anti-shrinkage agents, biocidal agents and water repellents.

Examples of setting accelerators include in particular heat resistant accelerator, such as ground gypsum encapsuled within dextrose monohydrate.

Examples of setting retarders include in particular natural proteins.

An example of anti-burning agents includes in particular dextrose monohydrate.

Examples of anti-sag agents include in particular sodium trimetaphosphate or tartaric acid. Examples of fire-resistant agents include in particular vermiculite, clay, glass fibers or mineral wool (e.g. glass wool).

Examples of anti-shrinkage agents include in particular vermiculite, clay, or microsilica. Examples of biocidal agents include in particular carbamates, such as 3-iodoprop-2-yn-1-yl butylcarbamate, or pyrothione complexes.

Examples of water-repellents include, in particular, a siloxane, a polysiloxane, or a wax.

In some embodiments, the composition further comprises at least one reinforcing agent. The reinforcing agent may be based on a polymer material (in particular organic polymer material) or based on a mineral material (in particular mineral fibers). When the reinforcing agent is an organic polymer material, it may be added to the composition in the form of an emulsion. For example, the reinforcing agent may be glass fibers or polyvinyl acetate.

The reinforcing agent(s), when present in the composition, represents (based on dry weight) preferably at least 1 wt% (or even at least 2 wt%), relative to the dry weight of stucco.

The composition described herein is typically formed by mixing all the components of the composition (stucco, foaming agent, water, first and second dispersant, and the optional further ingredients) with air. In some embodiments, a foam is formed from the mixing of water, foaming agent and air, and then is added to a mixture comprising stucco, first and second dispersant, water and the optional further ingredients.

In a preferred embodiment, the composition is formed by a process comprising adding the first and second dispersants separately:
i) to a mixture comprising all or part of the remaining components; or
ii) to water, in order to form a diluted solution, and then by adding said diluted solution to a mixture comprising all or part of the remaining components.

In such preferred embodiment, the first and second dispersants are typically in a pure or highly concentrated form (e.g. pure or highly concentrated liquid).

To be added separately, the first dispersant is typically added via a first dispersant feed (to the mixture (i) or to water (ii)), and the second dispersant is added via a second dispersant feed (to the mixture (i) or to water (ii)).

The "remaining components" refer to the components used for forming the composition (e.g. stucco, foaming agent, water, and the optional further ingredients), the first and second dispersant being excluded.

The composition described herein is particularly suitable for being used as a slurry in a method for manufacturing a plasterboard.

Hence, an object of the present invention is a method for the manufacture of a plasterboard, comprising :
- providing a composition as defined herein,
- casting the composition on a first liner, so as to form a wet gypsum layer on said first liner,
- providing a second liner on said wet gypsum layer, thereby forming a wet plasterboard, and
- drying the wet plasterboard, so as to form the plasterboard.

In the present application, the word "band" or "facing sheet" may be equivalently used instead of "liner". Each of the first and second liners is usually, independently from each other, a paper liner, a cardboard liner, or a glass veil, preferably both are paper liners.

In the process of the invention, the setting of the gypsum usually takes place as soon as the composition is formed and cast on the first liner. Typically, in said "wet gypsum layer", the gypsum is not completely set (i.e. the wet gypsum layer comprises a mixture of calcium sulphate dihydrate and calcium sulphate hemihydrate and water). During the setting, calcium sulphate hemihydrate and water contained in the composition react with each other to form calcium sulphate dihydrate. Such reaction is a hydration reaction.

The setting typically occurs in the absence of external heating, in particular at room temperature. Room temperature typically refers to a temperature comprised between 15°C and 35°C. Since the reaction between calcium sulphate hemihydrate and water is exothermic, the temperature of the wet gypsum layer during setting can be above room temperature.

The setting is usually completed just before the drying step. Typically, the wet plasterboard comprises a layer of set gypsum and the water in excess (or "unreacted water").

During the drying step of the method, the water in excess (or "unreacted water") is removed. The drying step is advantageously carried out at a temperature comprised between 85°C and 97°C, more particularly between 90 °C and 95 °C. Such temperature in the drying step refers to the temperature as measured in the gypsum layer of the plasterboard. A dry gypsum layer, comprising a dry set gypsum, is obtained after such step.

Preferably, the method of the invention is carried out under continuous conditions. Under such continuous conditions, the method of the invention typically comprises the following steps:
- continuously preparing a composition as defined herein in a mixer;
- continuously casting the composition from the mixer on a first liner, so as to form a wet gypsum layer on said first liner, wherein the first liner is entrained by a conveyor belt (for instance, towards an extruder),
- providing a second liner on the wet gypsum layer (for instance, at the extruder), thereby forming a continuous wet plasterboard, and
- cutting and drying the continuous wet plasterboard, so as to obtain a plasterboard.

When used, the extruder allows to flatten the second liner over the composition, to smooth the surfaces and adjusts the thickness of the plasterboard to the desired value.

The present invention also relates to a plasterboard obtainable by a method as defined herein.

The present invention also relates to a plasterboard comprising a gypsum core (more particularly, a core comprising dry set gypsum) which is based on the composition as defined herein, said gypsum core being between a first liner and a second liner.

The gypsum core in the plasterboard can also be called "gypsum layer".

The present invention also relates to a plasterboard comprising a gypsum core between a first liner and a second liner, wherein said gypsum core comprises:
- set gypsum, more particularly dry set gypsum,
- a first dispersant being polynaphthalene sulfonate and
- a second dispersant being chosen from a polycarboxylate ether, a polyaryl ether, a lignosulfonate and any combination thereof,
the dry weight content of the first dispersant being from 20 to 80 %, based on the total dry weight of the first and second dispersants.

The gypsum core of the plasterboard of the invention comprises air pores. The word "bubble" may be equivalently used instead of "pore". Such air pores advantageously have a d50 (area-weighted median pore diameter) of at least 220 µm, for instance at least 230 µm, at least 240 µm, at least 250 µm, or even at least 300 µm.

The "area-weighted median pore diameter" means that the cumulated surface from pores with a diameter from 0 to d50 represents 50% of the total pore surface, and the cumulated surface from pores have a diameter from d50 to the maximal diameter represents the other 50%. Previous work has shown that area-weighted median diameter is independent of the imaging technique used (Scanning Electron Microscopy or Optical Microscopy) and is not affected by a small-diameter cut-off.

As will be understood by those of ordinary skill in the art, pores formed in the gypsum core may have a variety of different shapes. Various methods may be used to determine a diameter of a pore having a non-circular shape, as will be understood by those of ordinary skill in the art. For example, in some embodiments, an area calculation algorithm may be used to determine the area of a pore with a complex shape, and then an effective diameter of the pore may be calculated based on the calculated area of the pore. The diameter may then be used for analyzing sets of pores.

The size distribution of the pores in the gypsum core may be monomodal, bimodal or multimodal.

The plasterboard generally has a thickness of 6 to 25 mm, preferably 10 to 15 mm.

The density of the gypsum core is usually from 0.4 to 1.5, for instance from 0.8 to 1.5 (more particularly from 1.0 to 1.2), or from 0.6 to 1.0.

In the present invention, the density of a composition or a layer is defined conventionally, that is to say by the ratio of the density of such composition or layer to the density of water, taken equal to 1000 kg/m3.

It is understood that the various aspects, particular embodiments, preferred embodiments, described above for the composition of the invention apply to the method for the manufacture of a plasterboard as described herein and to the plasterboard as described herein.

The present invention is illustrated by the following non-limiting examples.

### EXAMPLES

### Example #1

The influence of the dispersant on the board line was assessed. Specifically, while modifying the composition of the slurry, the wet paper-core adhesion was monitored visually at the cutter.

The tests were carried out using the composition described in table 1.

**Table 1**

| Gypsum source (stucco) | Synthetic |
|---|---|
| Boardweight | 8.1 kg/m² |
| Foaming agent type | Alkyl sulfate based |
| 1^{st} dispersant | PNS = Flube CA40 (Bozzetto) |
| 2^{nd} dispersant | PCE or PAE |
| Water/Stucco ratio ("water gauge") | 0.63 |
| Overall dispersant content (dry weight / dry weight of stucco) | 0.03 - 0.30 wt% |

During this industrial trial, different dispersant combinations were compared:
1. 100% PNS
2. 100% PCE
3. PNS + PCE
4. PNS + PAE

Table 2 below summarizes the results. All the compositions were at iso-fluidity (between 17 and 19cm ASTM slump, using a slump ring of 50 mm in diameter and 100 mm in height) as to prevent any disturbance on the industrial line.

**Table 2**

| Composition | Dispersant blend | d50 (µm) | Bubble Coalescence | Wet adhesion | Figure No. |
|---|---|---|---|---|---|
| #1 (comparative) | 100 % PCE | 207 | - | - | 1 |
| #2 | 50% PNS / 50 % PCE | 249 | + | + | 2 |
| #3 | 57% PNS / 43% PCE | 294 | + | + | - |
| #4 | 67% PNS / 33 % PCE | 304 | + | + | 3 |
| #5 | 70% PNS / 30% PCE | 308 | + | + | 4 |
| #6 | 70% PNS / 30% PAE | 300 | + | + | 5 |
| #7 (comparative) | 100% PNS | 297 | + | + | 6 |

| | | | | | |
|---|---|---|---|---|---|
| + : suitable property - : unsuitable property (i.e. low coalescence, low adhesion) | | | | | |

The results of Table 2 showed that, using PNS/PCE or PNS/PAE blends with a PNS content of at least 20wt%, it was possible to have suitable fluidity and coalescence, enabling a suitable adhesion.

At the water gauge studied in this example (Table 1: 0.63), PNS alone also provided suitable fluidity and coalescence. However, PNS alone does not allow to decrease the water gauge because the saturation effect observed with such dispersant causes a low fluidity at low water gauge. On the contrary, as shown in Table 3 below, it was demonstrated that a decrease of the water gauge was possible with a blend PNS/PCE according to the invention.

All the compositions of Table 3 were tested in the same conditions as detailed in Table 1 with a blend 50/50 PNS/PCE, except for the dispersant overall content which had to be step-by-step increased with the decrease of water gauge to maintain an iso-fluidity (between 17 and 19cm ASTM slump, using a slump ring of 50 mm in diameter and 100 mm in height).

**Table 3**

| Composition | Total dispersant content (dry weight / dry weight of stucco) | Water gauge | d50 (µm) | Bubble coalescence | Wet adhesion |
|---|---|---|---|---|---|
| #8-1 | 0.12 | 0.63 | 249 | + | + |
| #8-2 | 0.14 | 0.61 | 287 | + | + |
| #8-3 | 0.18 | 0.59 | 290 | + | + |
| #8-4 | 0.22 | 0.57 | 314 | + | + |
| #8-5 | 0.30 | 0.53 | 354 | + | + |

| | | | | | |
|---|---|---|---|---|---|
| + : suitable property | | | | | |

While decreasing the water gauge, a suitable fluidity and coalescence were maintained, enabling a suitable adhesion between the liner and the gypsum core.

### Example #2.

The same tests as those of Example 1 -Tables 1-2 were carried out using natural stucco instead of synthetic stucco. The composition used in this example 2 is described in table 4 below.

**Table 4**

| Gypsum source (stucco) | Natural |
|---|---|
| Boardweight | 8.3 kg/m² |
| Foaming agent type | Alkyl sulfate based |
| 1^{st} dispersant | PNS |
| 2^{nd} dispersant | PAE |
| Water/Stucco ratio | 0.65 |
| Overall dispersant content (dry weight / dry weight of stucco) | 0.39-0.72 wt% |

Table 5 below summarizes the results. All the compositions were at iso-fluidity (between 17 and 19cm ASTM slump, using a slump ring of 50 mm in diameter and 100 mm in height).

**Table 5**

| **Composition #** | **Dispersant blend** | **Bubble Coalescence** | **Wet adhesion** |
|---|---|---|---|
| #9 | 30 % PNS + 70% PAE | + | + |
| #10 | 27% PNS + 73% PAE | + | + |
| #11 | 24% PNS + 76% PAE | + | + |

| | | | |
|---|---|---|---|
| + : suitable property | | | |

Such results demonstrate that the use of a combination of two types of dispersants (PNS + PAE or PNS + PCE) is also applicable to natural stucco, which is more difficult to process.

Table 5 shows data at a water gauge of 0.65, with an overall dispersant content of 0.39-0.72 wt%.

Similar to what was presented in example 1 -Table 3, a blend of 24% PNS + 76% PAE was then used to decrease water/stucco ratio. It was possible to decrease the water gauge to 0.58 with 0.53-0.62% of total dispersant content (based on dry weight), while keeping both fluidity and bubble coalescence (and thus wet adhesion).

## Claims

1. A method for the manufacture of a plasterboard, comprising :
- providing a composition comprising water, stucco, a foaming agent, a first dispersant being polynaphthalene sulfonate and a second dispersant being chosen from a polycarboxylate ether, a polyaryl ether, a lignosulfonate and any combination thereof, the dry weight content of the first dispersant being from 20 to 80 %, based on the total dry weight of the first and second dispersants,
- casting the composition on a first liner, so as to form a wet gypsum layer on said first liner,
- providing a second liner on said wet gypsum layer, thereby forming a wet plasterboard, and
- drying the wet plasterboard, so as to form the plasterboard.

2. The method according to claim 1, wherein the composition is formed by a process comprising adding the first and second dispersants separately:
i) to a mixture comprising all or part of the remaining components; or
ii) to water, in order to form a diluted solution, and then by adding said diluted solution to a mixture comprising all or part of the remaining components.

3. The method according to claim 1 or 2, wherein the second dispersant is a polycarboxylate ether or a polyaryl ether, preferably a polycarboxylate ether.

4. The method according to claim 1 or 2, wherein the second dispersant is a lignosulfonate.

5. The method according to any one of the preceding claims, wherein the dry weight content of the first dispersant is from 40 to 80%, preferably from 50 to 70 %, based on the total dry weight of the first and second dispersants.

6. The method according to any one of the preceding claims, wherein the total content of dispersants, based on the dry weight, is from 0.03 to 4 wt%, preferably from 0.07 to 3 wt%, more preferably 0.07 to 2.5 wt%, even more preferably from 0.1 to 2 wt%, relative to the dry weight of stucco.

7. The method according to any one of the preceding claims, wherein the foaming agent comprises an alkyl sulfate.

8. The method according to any one of the preceding claims, wherein the content of the foaming agent, based on dry weight, is from 0.02 to 3 wt%, preferably from 0.03 to 2 wt%, more preferably from 0.05 to 1 wt%, even more preferably from 0.06 to 0.5 wt%, relative to the dry weight of stucco.

9. The method according to any one of the preceding claims, wherein the content of stucco is at least 70 wt%, relative to the total dry content of the composition.

10. The method according to any one of the preceding claims, wherein the weight ratio of water to stucco in the composition is:
- at least 0.19 and
- at most 0.85, preferably at most 0.80, more preferably at most 0.65, even more preferably at most 0.55.

11. The method according to any one of the preceding claims, wherein the composition further comprises one or more ingredients selected from adhesion agents, setting accelerators, setting retarders, anti-burning agents, anti-sag agents, fire-resistant agents, anti-shrinkage agents, biocidal agents, and water repellents.

12. The method according to any one of the preceding claims, wherein each of the first and second liners is, independently from each other, a paper liner, a cardboard liner, or a glass veil, preferably both are paper liners.

13. A plasterboard, preferably made by a method as defined in any one of claims 1 to 12, comprising a gypsum core between a first liner and a second liner, wherein said gypsum core comprises:
- set gypsum,
- a first dispersant being polynaphthalene sulfonate and
- a second dispersant being chosen from a polycarboxylate ether, a polyaryl ether, a lignosulfonate and any combination thereof,
the dry weight content of the first dispersant being from 20 to 80 %, based on the total dry weight of the first and second dispersants.

14. A composition comprising water, stucco, a foaming agent, a first dispersant being polynaphthalene sulfonate and a second dispersant being chosen from a polycarboxylate ether, a polyaryl ether, a lignosulfonate and any combination thereof, the dry weight content of the first dispersant being from 20 to 80 %, based on the total dry weight of the first and second dispersants.
